# EUROPEAN PATENT SPECIFICATION

(11) **EP 3 670 054 B1**
(45) Date of publication and mention of the grant of the patent: **11.12.2024**
(21) Application number: 19205296.7
(22) Date of filing: 25.10.2019
(51) Int. Cl.: B23K 9/00, B23K 9/04, B23K 9/173, B23K 9/26

(54) **DUAL WIRE WELDING OR ADDITIVE MANUFACTURING SYSTEM AND METHOD**
SYSTEM UND VERFAHREN ZUM DOPPELDRAHTSCHWEISSEN ODER ZUR GENERATIVEN FERTIGUNG
SYSTÈME ET PROCÉDÉ DE FABRICATION D'ADDITIF OU DE SOUDAGE DE FIL DOUBLE

(30) Priority: 26.10.2018 US 201862750893 P; 05.02.2019 US 201916267476
(43) Date of publication of application: 24.06.2020
(73) Proprietor: Lincoln Global, Inc., Santa Fe Springs, CA 90670 (US)
(72) Inventor: Stergios, Alexander J., Independence, OH Ohio 44131 (US); Chantry, Bruce John, Solon, OH Ohio 44139 (US); Kooken, Todd Eric Kooken, Solon, OH Ohio 44319 (US); Peters, Steven R., Huntsburg, OH Ohio 44046 (US); Weeks, Matthew A., Walloon Queensland, Queensland 4305 (AU)
(74) Representative: Grosse Schumacher Knauer von Hirschhausen

(56) References cited:
- WO-A1-2012/153177
- DE-A1- 102015 122 135
- JP-A- H02 258 168
- US-A- 2 583 507
- US-A1- 2008 169 336
- US-A1- 2011 309 062
- SHI CHUANWEI ET AL: "Physical characteristics of twin-wire indirect arc plasma", VACUUM, vol. 107, 1 September 2014 (2014-09-01), pages 41 - 50, XP028865883, ISSN: 0042-207X, DOI: 10.1016/J.VACUUM.2014.04.003

## Description

### Field of the Invention

The invention is related to a welding or additive manufacturing system according to claim 1, to a welding or additive manufacturing contact tip according to claim 6 and to a method of welding or additive manufacturing according to claim 12. This application is a continuation-in-part of U.S. Patent Application No. 15/671,295 filed on August 8, 2017.

Devices, systems, and methods consistent with the invention relate to material deposition with a dual wire configuration.

### TECHNICAL BACKGROUND

When welding, it is often desirable to increase the width of the weld bead or increase the length of the weld puddle during welding. There can be many different reasons for this desire, which are well known in the welding industry. For example, it may be desirable to elongate the weld puddle to keep the weld and filler metals molten for a longer period of time so as to reduce porosity. That is, if the weld puddle is molten for a longer period of time there is more time for harmful gases to escape the weld bead before the bead solidifies. Further, it may desirable to increase the width of a weld bead so as to cover wider weld gap or to increase a wire deposition rate. In both cases, it is common to use an increased electrode diameter. The increased diameter will result in both an elongated and widened weld puddle, even though it may be only desired to increase the width or the length of the weld puddle, but not both. However, this is not without its disadvantages. Specifically, because a larger electrode is employed more energy is needed in the welding arc to facilitate proper welding. This increase in energy causes an increase in heat input into the weld and will result in the use of more energy in the welding operation, because of the larger diameter of the electrode used. Further, it may create a weld bead profile or cross-section that is not ideal for certain mechanical applications. Rather than increasing the diameter of the electrode, it may be desirable to use two smaller electrodes simultaneously. Document JPH02258168 A discloses a method and apparatus for arc welding with multiple wires, wherein the molten metal at the tip of the wires having a certain distance is bridged.

### DESCRIPTION

In order to improve welding, especially with respect to weld bed and/or weld puddle width and/or length features and their modifications, a welding or additive manufacturing system is described and a welding or additive manufacturing contact tip and a method of welding or additive manufacturing.

The claimed invention is defined solely by the subject-matter of the independent claims 1 and 4. Preferred embodiments are subject of the subclaims. Other embodiments of the invention mentioned in the description and not falling under the scope of the claims are intended for illustrative purposes only. The following summary presents a simplified summary in order to provide a basic understanding of some aspects of the devices, systems and/or methods discussed herein. This summary is not an extensive overview of the devices, systems and/or methods discussed herein. It is not intended to identify critical elements or to delineate the scope of such devices, systems and/or methods. Its sole purpose is to present some concepts in a simplified form as a prelude to the more detailed description that is presented later.

In accordance with one aspect of the present invention, provided is a method of welding or additive manufacturing. The method includes providing a torch. The torch includes a contact tip assembly having a first exit orifice for a first wire electrode and a second exit orifice for a second wire electrode. The first and second exit orifices of the contact tip assembly are separated from each other such that a distance S is provided between the first wire electrode and the second wire electrode. The method includes adjusting the distance S provided between the first wire electrode and the second wire electrode. A current waveform is provided to both of the first wire electrode and the second wire electrode through the contact tip assembly. A bridge droplet is formed between the first wire electrode and the second wire electrode using the current waveform. The bridge droplet couples the first wire electrode and the second wire electrode prior to contacting a molten puddle during a deposition operation.

In accordance with another aspect of the present invention, provided is a welding or additive manufacturing system. The system includes a contact tip assembly. The contact tip assembly includes a first electrically conductive portion having a first wire passage terminating at first exit orifice and a second electrically conductive portion having a second wire passage terminating at a second exit orifice. The first electrically conductive portion and the second electrically conductive portion are directly electrically connected to each other. A spacing between the first exit orifice and the second exit orifice is adjustable. The system further includes means for adjusting the spacing between the first exit orifice and the second exit orifice.

In accordance with another aspect of the present invention, provided a welding or additive manufacturing contact tip. The contact tip includes an electrically-conductive body extending along an axis between a proximal end of the body and a distal end of the body. The body forms a first bore through the body that extends from a first entrance orifice at the proximal end to a first exit orifice at the distal end, a second bore through the body extending from a second entrance orifice at the proximal end to a second exit orifice at the distal end, a third bore through the body extending from a third entrance orifice at the proximal end to a third exit orifice at the distal end, and a fourth bore through the body extending from a fourth entrance orifice at the proximal end to a fourth exit orifice at the distal end. The first and second exit orifices are separated from each other by a first distance, and the third and fourth exit orifices are separated from each other by a second distance, wherein the first distance is different from the second distance. Both of the first distance and the second distance are configured to facilitate formation of a bridge droplet between at least two wire electrodes delivered through the contact tip. The bridge droplet couples the at least two wire electrodes prior to contacting a puddle during a deposition operation.

### BRIEF DESCRIPTION OF THE DRAWINGS

The above and/or other aspects of the invention will be more apparent by describing in detail exemplary embodiments of the invention with reference to the accompanying drawings, in which:
FIG. 1 illustrates a diagrammatical representation of an exemplary embodiment of a welding system of the present invention;
FIG. 2 illustrates a diagrammatical representation of an exemplary contact tip assembly in an embodiment of the present invention;
FIGs. 3A to 3C illustrate diagrammatical representations of a welding operation in an exemplary embodiment of the present invention;
FIGs. 4A to 4B illustrate diagrammatical representations current and magnetic field interactions in exemplary embodiments of the present invention;
FIG. 5A illustrates a diagrammatical representation of an exemplary weld bead with a single wire and FIG. 5B illustrates a diagrammatical representation of an exemplary weld bead with an embodiment of the invention;
FIG. 6 illustrates a diagrammatical representation of an exemplary weld process flow chart for an embodiment of the present invention;
FIG. 7 illustrates a diagrammatical representation of an alternative embodiment of a contact tip assembly for use with embodiments of the present invention;
FIG. 8 illustrates a diagrammatical representation of an exemplary weld current waveform for embodiments of the present invention;
FIG. 9 illustrates a diagrammatical representation of a further exemplary weld current waveform for embodiments of the present invention;
FIG. 10 illustrates a diagrammatical representation of an additional exemplary weld current waveform for embodiments of the present invention;
FIG. 11 illustrates an exemplary contact tip assembly of the present invention;
FIG. 12 illustrates an exemplary contact tip assembly of the present invention;
FIG. 13 illustrates an exemplary contact tip assembly of the present invention; and
FIG. 14 illustrates an exemplary contact tip assembly of the present disclosure, not falling under the scope of the claims.

### DETAILED DESCRIPTION OF EXEMPLARY EMBODIMENTS

Exemplary embodiments of the invention will now be described below by reference to the attached Figures. The described exemplary embodiments are intended to assist the understanding of the invention, and are not intended to limit the scope of the invention in any way. Like reference numerals refer to like elements throughout.

While embodiments of the present invention discussed herein are discussed in the context of GMAW type welding, other embodiments of the invention are not limited thereto. For example, embodiments can be utilized in SAW and FCAW type welding operations, as well as other similar types of welding operations. Further, while the electrodes described herein are solid electrodes, again, embodiments of the present invention are not limited to the use of solid electrodes as cored electrodes (either flux or metal cored) can also be used without departing from the spirit or scope of the present invention. Further, embodiments of the present invention can also be used in manual, semi-automatic and robotic welding operations. Because such systems are well known, they will not be described in detail herein.

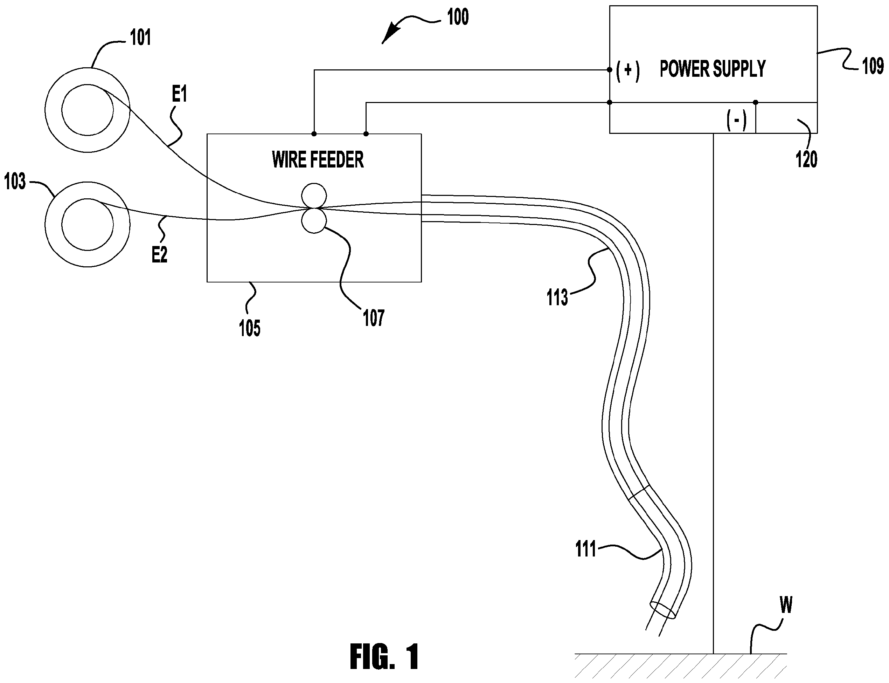

Turning now to the Figures, Figure 1 depicts an exemplary embodiment of a welding system 100 in accordance with an exemplary embodiment of the present invention. The welding system 100 contains a welding power source 109 which is coupled to both a welding torch 111 (having a contact tip assembly - not shown) and a wire feeder 105. The power source 109 can be any known type of welding power source capable of delivering the current and welding waveforms described herein, for example, pulse spray, STT and/or short arc type welding waveforms. Because the construction, design and operation of such power supplies are well known, they need not be described in detail herein. It is also noted that welding power can be supplied by more than one power supply at the same time - again the operation of such systems are known. The power source 109 can also include a controller 120 which is coupled to a user interface to allow a user to input control or welding parameters for the welding operation. The controller 120 can have a processor, CPU, memory etc. to be used to control the operation of the welding process as described herein. The torch 111, which can be constructed similar to known manual, semi-automatic or robotic welding torches can be coupled to any known or used welding gun and can be of a straight or gooseneck type as described above. The wire feeder 105 draws the electrodes E1 and E2 from electrode sources 101 and 103, respectively, which can be of any known type, such as reels, spools, containers or the like. The wire feeder 105 is of a known construction and employs feed rolls 107 to draw the electrodes E1 and E2 and push the electrodes to the torch 111. In an exemplary embodiment of the present invention, the feed rolls 107 and wire feeder 105 are configured for a single electrode operation. Embodiments of the present invention, using a dual wire configuration, can be utilized with a wire feeder 105 and rollers 107 only designed for a single wire feeding operation. For example, rollers 107 can be configured for a single 0.045 inch diameter electrode, but will suitable drive two electrodes of a 0.030 inch diameter without modification to thewire feeder 105 or the rollers 107. Alternatively, the wire feeder 105 can be designed to provide separate sets of rollers for feeding the electrodes E1/E2 respectively, or have rollers configured for feeding two or more electrodes simultaneously (e.g., via trapezoidal-shaped wire receiving grooves around the rollers that can accommodate two electrodes). In other embodiments, two separate wire feeders can also be used. As shown, the wire feeder(s) 105 is in communication with the power source 109 consistent with known configurations of welding operations.

Once driven by the rollers 107, the electrodes E1 and E2 are passed through a liner 113 to deliver the electrodes E1 and E2 to the torch 111. The liner 113 is appropriately sized to allow for the passage of the electrodes E1 and E2 to the torch 111. For example, for two 0.030 inch diameter electrodes, a standard 0.0625 inch diameter liner 113 (which is typically used for a single 0.0625 inch diameter electrode) can be used with no modification.

Although the examples referenced above discuss the use of two electrodes having a same diameter, the present invention is not limited in this regard as embodiments can use electrodes of a different diameter. That is, embodiments of the present invention can use an electrode of a first, larger, diameter and an electrode of a second, smaller, diameter. In such an embodiment, it is possible to more conveniently weld two work pieces of different thicknesses. For example, the larger electrode can be oriented to the larger work piece while the smaller electrode can be oriented to the smaller work piece. Further, embodiments of the present invention can be used for many different types of welding operations including, but not limited to, metal inert gas, submerged arc, and flux-cored welding. Further, embodiments of the present inventioncan be used for automatic, robotic and semi-automatic welding operations. Additionally, embodiments of the present invention can be utilized with different electrode types. For example, it is contemplated that a cored electrode can be coupled with a non-cored electrode. Further, electrodes of differing compositions can be used to achieve the desired weld properties and composition of the final weld bead. Thus, embodiments of the present invention can be utilized in a broad spectrum of welding operations.

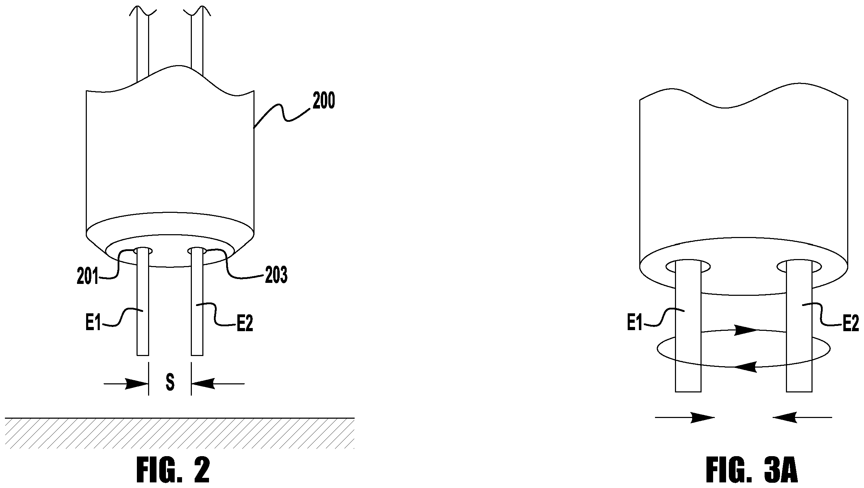

Figure 2 depicts an exemplary contact tip assembly 200 of the present invention. The contact tip assembly 200 can be made from known contact tip materials and can be used in any known type of welding gun. As shown in this exemplary embodiment, the contact tip assembly has two separate channels 201 and 230 which run the length of the contact tip assembly 200. During welding a first electrode E1 is passed through the first channel 201 and the second electrode E2 is passed through the second channel 203. The channels 201/203 are typically sized appropriately for the diameter of wire that is to be passed there through. For example, if the electrodes are to have the same diameter the channels will have the same diameters. However, if different diameters are to be used then the channels should be sized appropriately so as to properly transfer current to the electrodes. Additionally, in the embodiment shown, the channels 201/203 are configured such that the electrodes E1/E2 exit the distal end face of the contact tip 200 in a parallel relationship. However, in other exemplary embodiments the channels can be configured such that the electrodes E1/E2 exit the distal end face of the contact tip such that an angle in the range of +/- 15° exists between the centerlines of the respective electrodes. The angling can be determined based on the desired performance characteristics of the welding operation. It is further noted that in some exemplary embodiments the contact tip assembly can be a single integrated contact tip with a channels as shown, while in other embodiments the contact tip assembly can be comprised of two contact tip subassemblies located close to each other, where the current is directed to each of the contact tip subassemblies.

As shown in Figure 2, the respective electrodes E1/E2 are spaced by a distance S which is the distance between the closest edges of the electrodes. In exemplary embodiments of the present invention, this distance is in the range of 0.5 to 4 times the diameter of the larger of the two electrodes E1/E2, while in other exemplary embodiments the distance S is in the range of 2 to 3 times the largest diameter. For example, if each of the electrodes has a diameter of 1 mm, the distance S can be in the range of 2 to 3 mm. In other exemplary embodiments, the distance S is in the range of 0.25 to 2.25 times the diameter of one of the wires, such as the larger of the two electrodes. In manual or semi-automatic welding operations the distance S can be in the range of 0.25 to 2.25 times the largest electrode diameter, whereas in robotic welding operations the distance S can be in the same or another range, such as 2.5 to 3.5 times the largest electrode diameter. In exemplary embodiments, the distance S is in the range of 0.5 to 3.5mm.

As explained further below, the distance S should be selected to ensure that a single bridge droplet is formed between the electrodes, before the droplet is transferred, while preventing the electrodes from contacting each other, other than through the bridge droplet.

Figure 3A depicts an exemplary embodiment of the present invention, while showing in the interactions of the magnetic forces from the respective electrodesE1 and E2. As shown, due to the flow of current, a magnetic field is generated around the electrodes which tends to create a pinch force that draws the wires towards each other. This magnetic force tends to create a droplet bridge between the two electrodes, which will be discussed in more detail below.

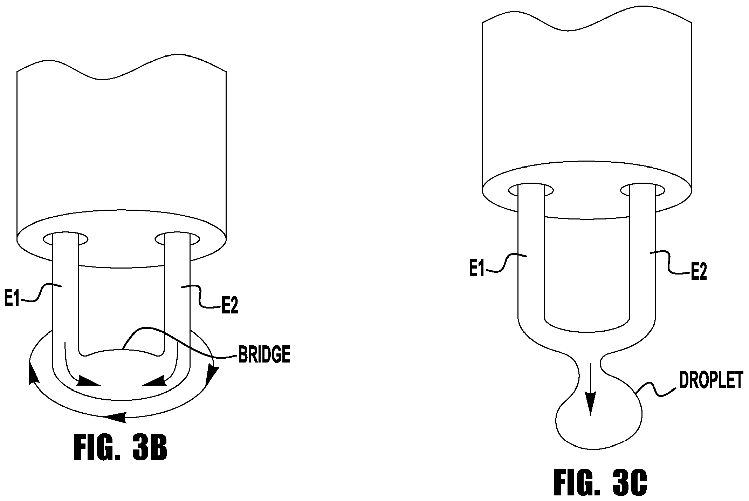

Figure 3B shows the droplet bridge that is created between the two electrodes. That is, as the current passing through each of the electrodes melts the ends of the electrodes the magnetic forces tend to draw the molten droplets towards each other until they connect with each other. The distance S is far enough such that the solid portions of the electrodes are not drawn to contact each other, but close enough that a droplet bridge is created before the molten droplet is transferred to the weld puddle created by the welding arc. The droplet is depicted in Figure 3C where the droplet bridge creates a single large droplet that is transferred to the puddle during welding. As shown, the magnetic pinch force acting on the droplet bridge acts to pinch off the droplet similar to the use of pinch force in a single electrode welding operation.

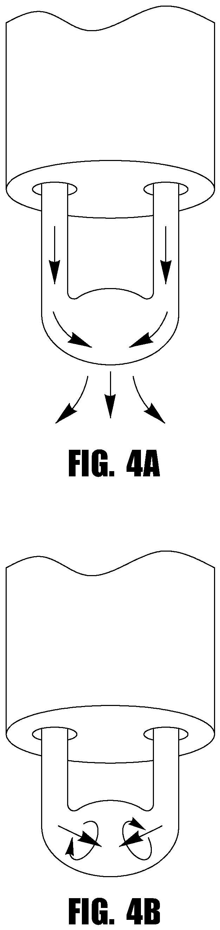

Further, Figure 4A depicts an exemplary representation of current flow in an embodiment of the present invention. As shown the welding current is divided so as to flow through each of the respective electrodes and passes to and through the bridge droplet as it is formed. The current then passes from the bridge droplet to the puddle and work piece. In exemplary embodiments where the electrodes are of the same diameter and type the current will be essentially divided evenly through the electrodes. In embodiments where the electrodes have different resistance values, for example due to different diameters and/or compositions/construction, the respective currents will be apportioned due to the relationship of V = I*R, as the welding current is applied to thecontact tip similar to known methodologies and the contact tip provides the welding current to the respective electrodes via the contact between the electrodes and the channels of the contact tip. Figure 4B depicts the magnetic forces within the bridge puddle that aid in creating the bridge droplet. As shown, the magnetic forces tend to pull the respective molten portions of the electrodes towards each other until they contact with each other.

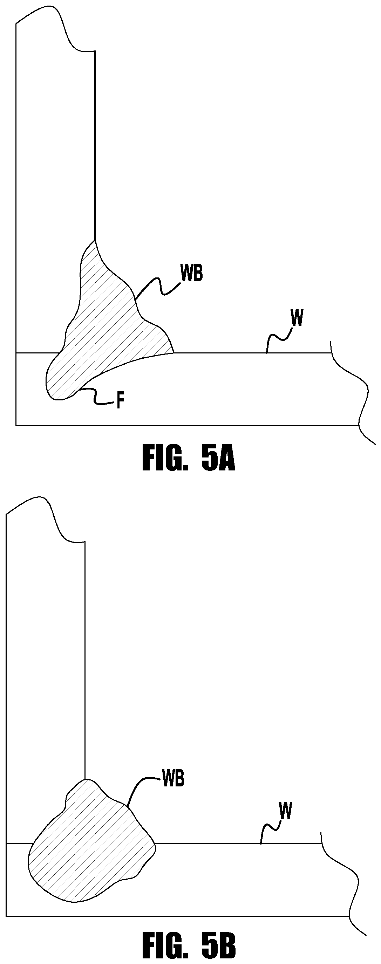

Figure 5A depicts an exemplary cross-section of a weld made with a single electrode welding operation. As shown, while the weld bead WB is of an appropriate width, the finger F of the weld bead WB, which penetrates into the work pieces W as shown, has a relatively narrow width. This can occur in single wire welding operations when higher deposit rates are used. That is, in such welding operations the finger F can become so narrow that it is not reliable to assume that the finger penetrated in the desired direction, and thus cannot be a reliable indicator of proper weld penetration. Further, as this narrow finger dives deeper this can lead to defects such as porosity trapped near the finger. Additionally, in such welding operations the useful sides of the weld bead are not as deeply penetrated as desired. Thus, in certain applications this mechanical bond is not as strong as desired. Additionally, in some welding applications, such as when welding horizontal fillet welds, the use of a single electrode made it difficult to achieve equal sized weld legs, at high deposition speeds, without the addition of too much heat to the welding operation. These issues are alleviated with embodiments of the present invention which can reduce the penetration of the finger and spread the finger making the side penetration of the weld wider. An example of this is shown in Figure 5B, which shows a weld bead of an embodiment ofthe present invention. As shown in this embodiment, a similar, or improved weld bead leg symmetry and/or length can be achieved, as well as a wider weld bead at the weld depth within the weld joint. This improved weld bead geometry is achieved while using less overall heat input into the weld. Therefore, embodiments of the present invention can provide improved mechanical weld performance with lower amounts of heat input, and at improved deposition rates.

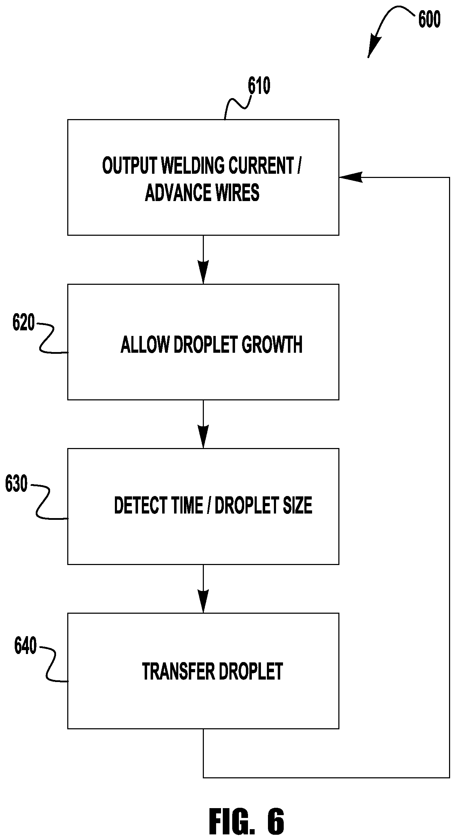

Figure 6 depicts a flow chart 600 of an exemplary welding operation of the present invention. This flow chart is intended to be exemplary and is not intended to be limiting. As shown, a welding current/output is provided by the welding power source 610 such that current is directed to the contact tip and electrodes consistent with known system constructions. Exemplary waveforms are discussed further below. During welding a bridge droplet is allowed to form 620 between the electrodes where the respective droplets from each electrode contact each other to create a bridge droplet. The bridge droplet is formed prior to contacting the weld puddle. During formation of the bridge droplet at least one of a duration or a droplet size is detected until such time as the droplet reaches a size to be transferred, and then the droplet is transferred to the puddle 640. The process is repeated during the welding operation. To control the welding process the power source controller/control system can use either one of a bridge droplet current duration and/or a bridge droplet size detection to determine if the bridge droplet is of a size to be transferred. For example, in one embodiment a predetermined bridge current duration is used for a given welding operation such that a bridge current is maintained for that duration, after which droplet transfer is then initiated. In a further exemplary embodiment, the controller of the power source/supply can monitor the welding current and/or voltage and utilize a predetermined threshold (for example a voltage threshold) for a given welding operation. For example, in such embodiments, as the detected arc voltage (detected via a known type of arc voltage detection circuit) detects that the arc voltage has reached a bridge droplet threshold level the power supply initiates a droplet separation portion of the welding waveform. This will be discussed further below in some exemplary embodiments of welding waveforms that can be used with embodiments of the present invention.

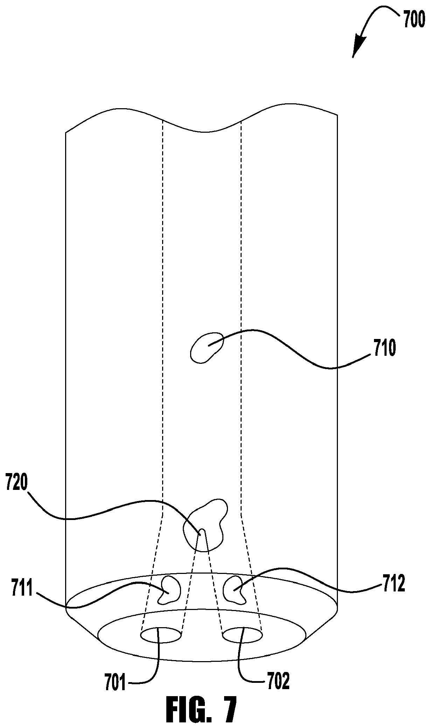

Figure 7 depicts an alternative exemplary embodiment of a contact tip 700 that can be used with embodiments of the present invention. As described previously, in some embodiments the electrodes can be directed to the torch via a single wire guide/liner. Of course, in other embodiments, separate wire guide/liners can be used. However, in those embodiments, where a single wire guide/liner is used the contact tip can be designed such that the electrodes are separated from each other within the contact tip. As shown in Figure 7, this exemplary contact tip 700 has a single entrance channel 710 with a single orifice at the upstream end of the contact tip 700. Each of the electrodes enter the contact tip via this orifice and pass along the channel 710 until they reach a separation portion 720 of the contact tip, where the separation portion directs one electrode into a first exit channel 711 and a second electrode into the second exit channel 712, so that the electrodes are directed to their discrete exit orifices 701 and 702, respectively. Of course, the channels 710, 711 and 712 should be sized appropriately for the size of electrodes to be used, and the separation portion 720 should be shaped so as to not scar or scratch the electrodes. As shown in Figure 7, the exit channels 711 and 712 are angled relative to each other, however, as shown in Figure 2, these channels can also be oriented parallel to each other.

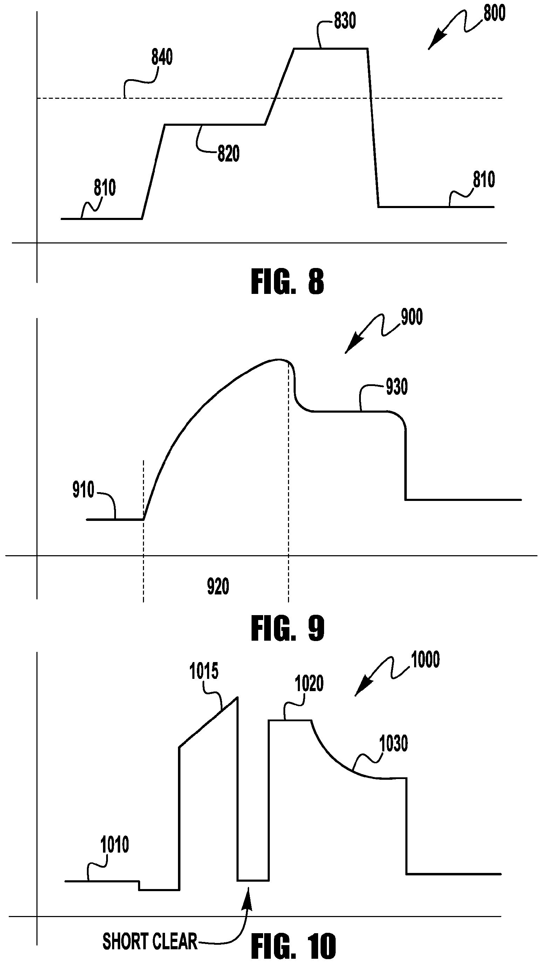

Turning now to Figures 8 through 10, various exemplary waveforms that can be used with exemplary embodiments of the present invention are depicted. In general, in exemplary embodiments of the present invention, the current is increased to create the bridge droplet and build it for transfer. In exemplary embodiments, at transfer the bridge droplet has an average diameter which is similar to the distance S between the electrodes, which can be larger than the diameter of either of the electrodes. When the droplet is formed it is transferred via a high peak current, after which the current drops to a lower (e.g. background) level to remove the arc pressure acting on the wires. The bridging current then builds the bridge droplet without exerting too much pinch force to pinch off the developing droplet. In exemplary embodiments, this bridging current is at a level in the range of 30 to 70% between the background current and the peak current. In other exemplary embodiments, the bridging current is in the range of 40 to 60% between the background current and the peak current. For example, if the background current is 100 amps and the peak current is 400 amps, the bridging current is in the range of 220 to 280 amps (i.e., 40 to 60% of the 300 amp difference). In some embodiments the bridging current can be maintained for a duration in the range of 1.5 to 8 ms, while in other exemplary embodiments the bridging current is maintained for a duration in the range of 2 to 6 ms. In exemplary embodiments the bridging current duration begins at the end of the background current state and includes the bridging current ramp up, where the ramp up can be in the range of 0.33 to 0.67 ms depending on the bridging current level and the ramp rate. With exemplary embodiments of the present invention, the pulse frequency of waveforms can be slowed down as compared to single wire processes to allow for droplet growth which can improve control and allow for higher deposition rates as compared to single wire operations.

Figure 8 depicts an exemplary current waveform 800 for a pulsed spray welding type operation. As shown, the waveform 800 has a background current level 810, which then transitions to a bridge current level 820, during which the bridge droplet is grown to a size to be transferred. The bridge current level is less than a spray transition current level 840 at which the droplet starts its transfer to the puddle. At the conclusion of the bridge current 820 the current is raised to beyond the spray transition current level 840 to a peak current level 830. The peak current level is then maintained for a peak duration to allow for the transfer of the droplet to be completed. After transfer the current is then lowered to the background level again, as the process is repeated. Thus, in these embodiments the transfer of the single droplet does not occur during the bridge current portion of the waveform. In such exemplary embodiments, the lower current level for the bridge current 820 allows a droplet to form without excessive pinching force to direct the droplet to the puddle. Because of the use of the bridge droplet, welding operations can be attained where the peak current 830 can be maintained for a longer duration at a higher level than using a single wire. For example, some embodiments can maintain the peak duration for at least 4 ms, and in the range of 4 to 7 ms, at a peak current level in the range of 550 to 700 amps, and a background current in the range of 150 to 400 amps. In such embodiments, a significantly improved deposition rate can be achieved. For example, some embodiments have achieved deposition rates in the range of 19 to 26lbs/hr, whereas similar single wire processes-can only achieve a deposition rate in the range of 10 to 16 Ibs/hr. For example, in one nonlimiting embodiment a pair of twin wires having a diameter of 0.040", using a peak current of 700 amps, a background current of 180 amps and a droplet bridge current of 340 amps can be deposited at a rate of 19lb/hr at a frequency of 120 Hz. Such a deposition is at a frequency much less than conventional welding processes, and thus more stable.

Figure 9 depicts another exemplary waveform 900 that can be used in a short arc type welding operation. Again, the waveform 900 has a background portion 910 prior to a short response portion 920 which is structured to clear a short between the droplet and the puddle. During the shorting response 920 the current is raised to clear the short and as the short is cleared the current is dropped to a bridge current level 930 during which the bridge droplet is formed. Again, the bridge current level 930 is less than the peak current level of the shorting response 920. The bridge current level 930 is maintained for a bridge current duration that allows a bridge droplet to be formed and directed to the puddle. During transfer of the droplet current is then dropped to the background level, which allows the droplet to advance until a short occurs. When a short occurs the shorting response/bridge current waveform is repeated. It should be noted that in embodiments of the present invention it is the presence of the bridge droplet that makes the welding process more stable. That is, in traditional welding processes that use multiple wires there is no bridge droplet. In those processes when one wire shorts or makes contact with the puddle the arc voltage drops and the arc for the other electrode will go out. This does not occur with embodiments of the present invention, where the bridge droplet is common to each of the wires.

Figure 10 depicts a further exemplary waveform 1000, which is a STT (surface tension transfer) type waveform. Because such waveforms are known, they will not be described in detail herein. To further explain an STT type waveform, its structure, use and implementation, US. Publication No. 2013/0264323, filed on April 5, 2012, is incorporated herein in its entirety. Again, this waveform has a background level 1010, and a first peak level 1015 and a second peak level 1020, where the second peak level is reached after a short between the droplet and puddle is cleared. After the second peak current level 1020, the current is dropped to a bridge current level 1030 where the bridge droplet is formed, after which the current is dropped to the background level 1010 to allow the droplet to be advanced to the puddle, until it makes contact with the puddle. In other embodiments, an AC waveform can be used, for example an AC STT waveform, pulse waveform, etc. can be used.

As discussed above, the wire electrodes used in a multi-wire deposition operation (e.g., welding, additive manufacturing, hardfacing, etc.) can be spaced by a distance S that facilitates formation of a bridge droplet between the wire electrodes. The size of the bridge droplet is determined by the spacing between the wire electrodes and the spacing between the exit orifices in the contact tip. The size of the bridge droplet determines the width of the electric arc that exists during the deposition operation, and reducing the spacing between the exit orifices and wire electrodes narrows the arc width. Larger bridge droplets may be preferred for larger welds, and smaller bridge droplets preferred for smaller welds. Deposition rate is impacted by the arc width, and the deposition rate for small gauge wires can be increased by reducingthe spacing between the exit orifices and wire electrodes (e.g., from approximately 2mm to 1 mm).

The maximum spacing between the exit orifices and wire electrodes is reached when the magnetic forces developed by the current waveform (e.g., at the peak current level) still allow formation of the bridge droplet, and is exceeded when bridging is no longer possible. The minimum spacing is that which keeps the wires separated at the point of bridging. The magnetic forces tend to pull the wire electrodes together, and the wires are somewhat flexible. Thus, the minimum spacing between the exit orifices and wire electrodes will depend on the stiffness of the electrodes, which is impacted by parameters such as wire diameter, material of construction, etc.

It may be desirable for an operator of the welding system to change the spacing between exit orifices in the contact tip assembly to adjust the distance S provided between the wire electrodes. For example, the operator may reduce or increase the spacing depending on the size of the weld to be performed, the size of the wire electrodes, the desired deposition rate, etc. One method of adjusting the distance S provided between the wire electrodes is to replace the contact tip assembly with another having the desired spacing. A set of contact tip assemblies can be provided to the operator wherein each contact tip assembly has a slightly different exit orifice spacing to set the distance S within a given range, such as in the range of 0.5 to 3.5mm in 0.5mm increments. Depending on the deposition operation to be performed and the desired arc width, the operator can choose a contact tip assembly with the appropriate exit orifice spacing.

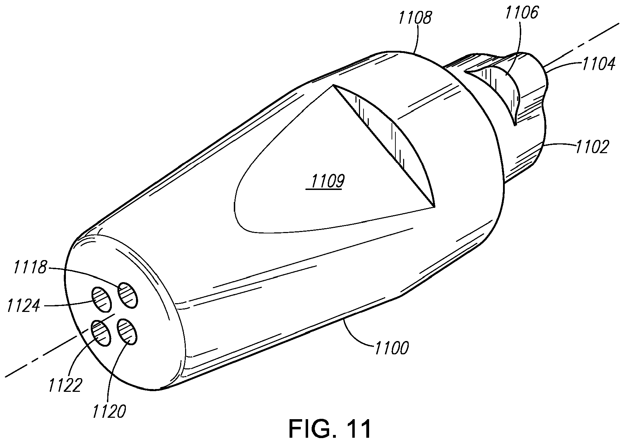

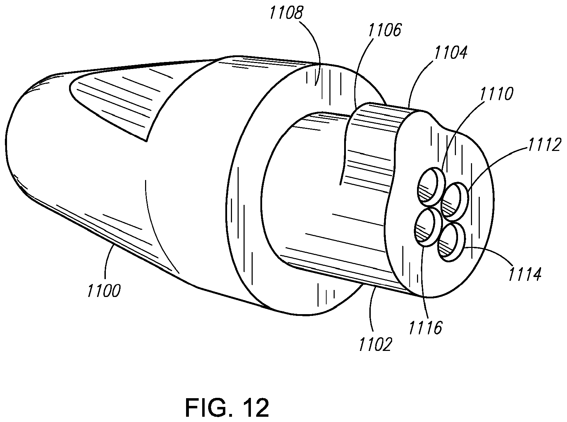

Alternatively, a single contact tip can include multiple sets of bores or channels for the wire electrodes having exit orifices separated by different distances. The sets of exit orifices facilitate the formation of bridge droplets and arcs of different widths, depending on the spacing between the exit orifices. Figures 11 and 12 illustrate one such contact tip assembly 1100. The proximal end of the contact tip 1100 is shown in Figure 12, and the distal end of the contact tip is shown in Figure 11.

The proximal end of the contact tip 1100 would connect to a torch, and in particular to a gas diffuser (not shown) in the torch. Conventional contact tips have threads on the proximal end of the contact tip that thread into the diffuser. The contact tip and diffuser are connected by screwing the contact tip into the diffuser. Such a fastening system works well for welding with single welding wires. The welding wire can be threaded through the contact tip and the contact tip can be rotated around the welding wire multiple times and screwed into the diffuser. However, when welding with multiple welding wires simultaneously passing through the contact tip, such a fastening system would result in an undesirable twisting of the welding wires. For example, if two welding wires are fed through a contact tip, subsequently threading the contact tip onto the diffuser by multiple turns requiring greater than 360° of rotation will result in the welding wires becoming twisted and unable to be fed through the contact tip.

The contact tip 1100 shown in Figures 11 and 12 can be attached to a diffuser by rotation of the contact tip through less than 360°, such as 270° (three-quarter turn), 180° (one-half turn), 90° (quarter turn), less than 90°, etc. The rotation of the contact tip 1100 necessary to attach the contact tip to the diffuser can be any angle as desired that is preferably less than 360° and results in the multiple wire electrodespassing through the contact tip not becoming unduly twisted during installation of the contact tip. If the welding wires are unduly twisted during installation of the contact tip, wire feeding problems will result and "bird nesting" of the wire electrodes can occur. The contact tip 1100 includes a generally cylindrical mounting shank 1102 having a projection or tab 1104. The tab 1104 would engage a slot in the diffuser that allows for the mounting of the contact tip 1100 with less than 360° or rotation. The slot in the diffuser can have a helical portion with a slight upstream pitch that draws the contact tip 1100 inward as the contact tip is rotated within the slot. The tab 1104 can have a tapered edge 1106 that matches the pitch of the slot in the diffuser to help ensure a tight connection between the two components. It can be seen that the circumference of the mounting shank 1102 is smaller than the adjacent truncated conical portion forming the distal end of the contact tip 1100, which results in a shoulder 1108 projecting radially from the mounting shank. The shoulder 1108 can seat against the terminal end face of the diffuser when the contact tip 1100 is installed onto the diffuser. The contact tip 1100 can include flats 1109 for gripping by a tool (e.g., pliers) when the contact tip is installed on the diffuser.

The contact tip 1100 includes two pairs of bores or wire channels for setting the distance S between two wire electrodes. The bores or channels extend along an axis of the contact tip between entrance orifices 1110, 1112, 1114, 1116 at the proximal end and exit orifices 1118, 1120, 1122, 1124 at the distal end. The bores or channels can be arranged symmetrically about the axis of the contact tip and generally parallel to the axis, however other orientations are possible. The exit orifices 1118, 1120, 1122, 1124 are arranged in a diamond configuration, with two of the exit orifices1118, 1122 being spaced further apart than the other two exit orifices 1120, 1124. In one example, the center to center spacing of the vertically-aligned exit orifices 1118, 1122 is approximately 3mm and the center to center spacing of the horizontally-aligned exit orifices 1120, 1124 is approximately 2mm. The resulting distance S between the two wire electrodes can be approximately 2mm and 1mm, respectively, for the vertically-aligned and horizontally-aligned exit orifices. Adjacent bores and exit orifices (e.g., one of the vertically-aligned exit orifices 1118, 1122 and one of the horizontally-aligned exit orifices 1120, 1124) can be even more closely spaced (e.g., 0.5 to 0.7mm). If adjacent bores and exit orifices are used during a deposition operation, an even closer spacing S between the two wire electrodes is possible.

Using the contact tip 1100, an operator can adjust the distance S between two wire electrodes by moving the wires from one pair of bores to another pair. For example, moving the wires from the vertically-aligned bores/exit orifices 1118, 1122 to the horizontally-aligned bores/exit orifices 1120, 1124 will reduce the distance S and resulting arc width during the deposition operation.

Various spacing configurations for the bores, entrance, and exit orifices will be apparent to one of ordinary skill in the art. In exemplary embodiments, the distance S between the two wire electrodes located in any of the bores is in the range of 0.5 to 3.5mm. The use of a contact tip 1100 having more than two exit orifices can allow up to four wire electrodes to be used simultaneously during a deposition operation. Further, the bores and exit orifices of the contact tip 1000 can be sized to accommodate wires of different sizes. For example, the vertically-aligned bores/exit orifices 1118, 1122 can have a first diameter to accommodate a first wire size and the horizontally-aligned bores/exit orifices 1120, 1124 can have a second diameter, different from the first diameter, to accommodate a second wire size different from the first wire size. The spacing between the exit orifices can facilitate the formation of bridge droplets when performing a deposition operation using either of the wire sizes. Further, the spacing between adjacent exit orifices (e.g., 1120, 1122) can allow for the use of differently-sized wires simultaneously during a deposition operation, and facilitate the formation of bridge droplets between the differently-sized wires.

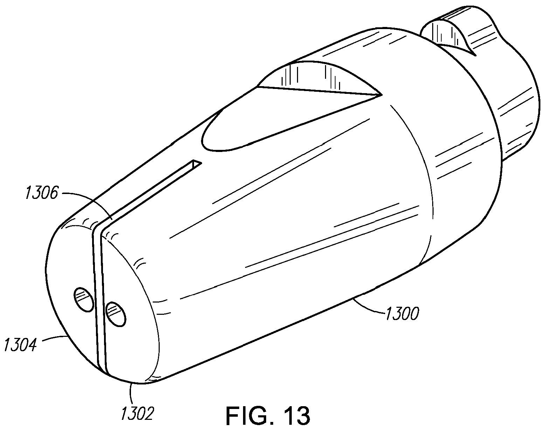

Figure 13 depicts a contact tip assembly 1300 having a bifurcated distal end. Each branch 1302, 1304 of the bifurcation includes a bore and exit orifice, and each branch of the bifurcation is separated by a slit 1306 extending axially into the contact tip assembly 1300 from the distal end. The proximal end of the contact tip 1300 can include a similar mounting shank and tab 1310 as discussed above. The bifurcation and slit 1306 allows some inward bending of each branch of the bifurcation, to adjust the spacing between the exit orifices and wire electrodes. The torch can include a clamping mechanism, such as a collar, that squeezes the bifurcation to adjust the spacing between the branches and, thus, the spacing between the exit orifices. The torch can include graduations or other markings to inform an operator of the current spacing between the exit orifices. The graduations can be associated with the position of the clamping mechanism in the torch. For example, the spacing between the exit orifices can be identified by the linear position of the clamping mechanism as indicated by the graduations. The adjustable spacing between the exit orifices is configured to facilitate formation of a bridge droplet between the wire electrodes delivered through the contact tip 1300.

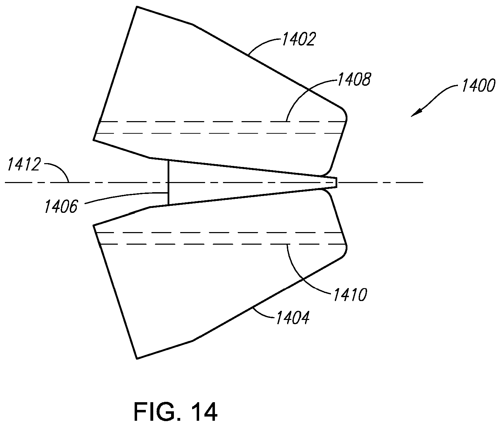

Figure 14 schematically depicts another adjustable contact tip assembly 1400. The contact tip assembly 1400 includes first 1402 and second 1404 electrically conductive portions. The electrically conductive portions 1402, 1404 are directly electrically connected to each other to receiving a welding waveform and conduct the welding waveform to respective wire electrodes passing through the electrically conductive portions. The electrically conductive portions 1402, 1404 are separated by a wedge 1406 located between the electrically conductive portions. The wedge 1406 may also be electrically conductive. The electrically conductive portions 1402, 1404 can have bores 1408, 1410 for the welding electrodes that are parallel to the axis 1412 of the contact tip assembly 1400. The electrically conductive portions 1402, 1404 are essentially separate contact tips for each welding electrode. The electrically conductive portions 1402, 1404 can be moved along the wedge 1406 to adjust the spacing between their exit orifices and the distance between the welding electrodes. Moving the electrically conductive portions 1402, 1404 rearward along the wedge 1406 will increase the spacing between the exit orifices and welding electrodes, while moving them forward along the wedge will decrease said spacing. The torch can include a clamping mechanism to fix the positions of the electrically conductive portions 1402, 1404 relative to the wedge 1406. The adjustable spacing between the exit orifices is configured to facilitate formation of a bridge droplet between the wire electrodes delivered through the contact tip assembly 1400.

The use of embodiments described herein can provide significant improvements in stability, weld structure and performance over known welding operations. However, in addition to welding operations, embodiments can be used inadditive manufacturing operations. In fact the system 100 described above can be used in additive manufacturing operations as in welding operations. In exemplary embodiments, improved deposition rates can be achieved in additive manufacturing operations. For example, when using an STT type waveform in a single wire additive process, using an 0.045" wire can provide a deposition rate of about 5 Ib/hr before becoming unstable. However, when using embodiments of the present invention and two 0.040" wires a deposition rate of 7lbs/hr can be achieved in a stable transfer. Because additive manufacturing processes and systems are known, the details of which need not be described herein. In such processes a bridging current, such as that descried above, can be used in the additive manufacturing current waveform.

It is noted that exemplary embodiments are not limited to the usage of the waveforms discussed above and described herein, as other welding type waveforms can be used with embodiments of the present invention. For example, other embodiments can use variable polarity pulsed spray welding waveforms, AC waveforms, etc. For example, in variable polarity embodiments the bridge portion of the welding waveform can be done in a negative polarity such that the bridge droplet is created while reducing the overall heat input into the weld puddle. For example, when using AC type waveforms, the waveforms can have a frequency of 60 to 200 Hz of alternating negative and positive pulses to melt the two wires and form the bridge droplet between them. In further embodiments the frequency can be in the range of 80 to 120 Hz.

As explained previously, embodiments of the present invention can be used with different types and combinations of consumables including flux coredconsumables. In fact, embodiments of the present invention can provide a more stable welding operation when using flux cored electrodes. Specifically, the use of a bridging droplet can aid in stabilizing flux core droplets that can tend to be unstable in a single wire welding operation. Further, embodiments of the present invention allow for increased weld and arc stability at higher deposition rates. For example, in single wire welding operations, at high current and high deposition rates the transfer type for the droplets can change from streaming spray to a rotational spray, which appreciably reduces the stability of the welding operation. However, with exemplary embodiments of the present invention the bridge droplet stabilizes the droplets which significantly improves arc and weld stability at high deposition rates, such as those above 20lb/hr.

Additionally, as indicated above the consumables can be of different types and/or compositions, which can optimize a given welding operation. That is, the use of two different, but compatible, consumables can be combined to create a desired weld joint. For example, compatible consumables include hardfacing wires, stainless wires, nickel alloys and steel wires of different composition can be combined. As one specific example a mild steel wire can be combined with an overalloyed wire to make a 309 stainless steel composition. This can be advantageous when a single consumable of the type desired does not have desirable weld properties. For example, some consumables for specialized welding provide the desired weld chemistry but are extremely difficult to use and have difficulty providing a satisfactory weld. However, embodiments of the present invention allow for the use of two consumables that are easier to weld with to be combined to create the desired weld chemistry. Embodiments of the present invention can be used to create an alloy/deposit chemistry that is nototherwise commercially available, or otherwise very expensive to manufacture. Thus, two different consumables can be used to obviate the need for an expensive or unavailable consumable. Further, embodiments can be used to create a diluted alloy. For example, a first welding wire could be a common inexpensive alloy and a second welding wire could be a specialty wire. The desired deposit would be the average of the two wires, mixed well in the formation of the bridged droplet, at the lower average cost of the two wires, over an expensive specialty wire. Further, in some applications, the desired deposit could be unavailable due to the lack of appropriate consumable chemistry, but could be reached by mixing two standard alloy wires, mixed within the bridged droplet and deposited as a single droplet. Further, in some applications, such as the application of wear resistance metals, the desired deposit may be combination of tungsten carbide particles from one wire and chrome carbide particles from another. Still in another application, a larger wire housing larger particles within is mixed with a smaller wire containing fewer particles or smaller particles, to deposit a mixture of the two wires. Here the expected contribution from each of the wires is proportional to the size of wire given the wire feed speeds are same. In yet another example, the wire feed speeds of the wires are different to allow the alloy produced to change based on the desired deposit but the mixing of the wires is still produced by the bridged droplet created between the wires.

While the invention has been particularly shown and described with reference to exemplary embodiments thereof, the invention is not limited to these embodiments. It will be understood by those of ordinary skill in the art that various changes in form and details may be made therein without departing from the scope of the invention as defined by the following claims.

### REFERENCE NUMERALS

| | | | |
|---|---|---|---|
| 100 | welding system | 1100 | contact tip (assembly) |
| 101 | electrode source | 1102 | mounting shank |
| 103 | electrode source | 1104 | tab |
| 105 | wire feeder | 1108 | shoulder |
| 107 | feed roll | 1110 | entrance orifice |
| 109 | power source / power supply | 1112 | entrance orifice |
| 111 | welding torch | 1114 | entrance orifice |
| 113 | liner | 1116 | entrance orifice |
| 120 | controller | 1118 | exit orifice |
| 200 | tip assembly | 1120 | exit orifice |
| 201 | channel | 1122 | exit orifice |
| 203 | channel | 1124 | exit orifice |
| 600 | flow chart | 1300 | contact tip |
| 610 | output welding current/advance wires / step | 1302 | branch |
| 620 | step | 1310 | tab |
| 630 | step | 1306 | slit |
| 640 | step | 1310 | tab |
| 700 | contact tip | 1402 | conductive portion |
| 701 | exit orfice | 1404 | space portion |
| 702 | exit orfice | 1406 | wedge |
| 710 | channel | 1408 | bore |
| 711 | channel | 1410 | bore |
| 712 | channel | 1412 | axis |
| 720 | separation portion | | |
| 820 | bridge current | | |
| 830 | current level | S | distance |
| 840 | current level | E1 | electrode |
| 900 | waveform | E2 | electrode |
| 930 | current level | W | work pieces |
| 1000 | waveform | WB | wekd bead |
| 1010 | background level | F | finger |
| 1015 | peak level | | |
| 1020 | peak level | | |
| 1030 | bridge current level | | |

## Claims

1. A welding or additive manufacturing system (100), comprising:
a contact tip assembly (200, 700, 1100), including:
a first electrically conductive portion having a first wire passage terminating at first exit orifice;
a second electrically conductive portion having a second wire passage terminating at a second exit orifice,
wherein the first electrically conductive portion and the second electrically conductive portion are directly electrically connected to each other, and a spacing between the first exit orifice and the second exit orifice is adjustable; **characterized in that** the system comprises means for adjusting the spacing between the first exit orifice and the second exit orifice,
wherein the means for adjusting the spacing comprises
a set of contact tip assemblies, wherein each contact tip assembly has a slightly different exit orifice spacing, or
a contact tip assembly including multiple sets of bores or channels for the wire electrodes having exit orifices (1118, 1120, 1122, 1124) separated by different distances.

2. The welding or additive manufacturing system (100) of claim 1, further comprising a power supply (109) and a controller (120) which controls operation of the power supply (109), wherein the power supply (109) is operatively connected to the contact tip assembly (200, 700, 1100) to provide a current waveform to the contact tip assembly (100, 700, 1100), and wherein the bridge droplet is formed by the current waveform.

3. The welding or additive manufacturing system (100) of claims 1 or 2, wherein an arc width of the deposition operation depends on a distance (S) provided between the two wire electrodes delivered through the contact tip (200, 700, 1100) assembly.

4. A method of welding or additive manufacturing, comprising the steps of:
providing a torch including a contact tip assembly (200, 700, 1100) having a first exit orifice for a first wire electrode and a second exit orifice for a second wire electrode, wherein the first and second exit orifices of the contact tip assembly are separated from each other such that a distance S is provided between the first wire electrode and the second wire electrode;
wherein the method further comprises adjusting the distance S provided between the first wire electrode and the second wire electrode;
providing a current waveform to both of the first wire electrode and the second wire electrode through the contact tip assembly; and
forming a bridge droplet between the first wire electrode and the second wire electrode using the current waveform, wherein the bridge droplet couples the first wire electrode and the second wire electrode prior to contacting a molten puddle during a deposition operation, wherein the step of adjusting the distance S includes replacing the contact tip assembly, or wherein the step of adjusting the distance (S) includes changing a spacing between the first exit orifice and the second exit orifice of the contact tip assembly, wherein adjusting of the spacing is performed by adjusting a distance between the first exit orifice and the second exit orifice by using a set of contact tip assemblies, wherein each contact tip assembly has a slightly different exit orifice spacing, or by a contact tip assembly including multiple sets of bores or channels for the wire electrodes having exit orifices separated by different distances.

5. The method of claim 4, wherein an arc width of the deposition operation depends upon the distance S provided between the first wire electrode and the second wire electrode.

6. The method of claim 4 or 5, wherein the distance S is in the range of 0.5 to 3.5 mm as measured between closest edges of the first wire electrode and the second wire electrode.

7. The method of any of the claims 4 to 6, wherein the contact tip assembly includes:
a first bore in communication with the first exit orifice;
a second bore in communication with the second exit orifice;
a third bore in communication with a third exit orifice; and
a fourth bore in communication with a fourth exit orifice, and
wherein the step of adjusting the distance S includes moving the first wire electrode from the first bore to the third bore, and moving the second wire electrode from the second bore to the fourth bore.

## Patentansprüche

1. System (100) zum Schweißen oder zur additiven Fertigung, das umfasst:
eine Kontaktspitzenbaugruppe (200, 700, 1100), die aufweist:
einen ersten elektrisch leitfähigen Abschnitt, der einen ersten Drahtdurchgang aufweist, der an einer ersten Austrittsöffnung endet;
einen zweiten elektrisch leitfähigen Abschnitt, der einen zweiten Drahtdurchgang aufweist, der an einer zweiten Austrittsöffnung endet,
wobei der erste elektrisch leitfähige Abschnitt und der zweite elektrisch leitfähige Abschnitt direkt elektrisch miteinander verbunden sind, und ein Abstand zwischen der ersten Austrittsöffnung und der zweiten Austrittsöffnung verstellbar ist;
**dadurch gekennzeichnet, dass** das System ein Mittel zum Verstellen des Abstands zwischen der ersten Austrittsöffnung und der zweiten Austrittsöffnung umfasst,
wobei das Mittel zum Verstellen des Abstands umfasst:
einen Satz Kontaktspitzenbaugruppen, wobei jede Kontaktspitzenbaugruppe einen geringfügig anderen Austrittsöffnungsabstand aufweist, oder
eine Kontaktspitzenbaugruppe, die mehrere Sätze von Bohrungen oder Kanälen für die Drahtelektroden enthält und Austrittsöffnungen (1118, 1120, 1122, 1124) aufweist, die durch unterschiedliche Distanzen getrennt sind.

2. System (100) zum Schweißen oder zur additiven Fertigung nach Anspruch 1, das des Weiteren eine Stromversorgung (109) und einen Controller (120) umfasst, der den Betrieb der Stromversorgung (109) steuert, wobei die Stromversorgung (109) mit der Kontaktspitzenbaugruppe (200, 700, 1100) wirkverbunden ist, um eine Stromwellenform an die Kontaktspitzenbaugruppe (100, 700, 1100) anzulegen, und wobei der Überbrückungstropfen durch die Stromwellenform gebildet wird.

3. System (100) zum Schweißen oder zur additiven Fertigung nach Anspruch 1 oder 2, wobei eine Lichtbogenbreite des Abschmelzvorgangs von einer Distanz (S) abhängig ist, die zwischen den zwei Drahtelektroden besteht, die durch die Kontaktspitzenbaugruppe (200, 700, 1100) hindurch zugeführt werden.

4. Verfahren zum Schweißen oder zur additiven Fertigung, das die folgenden Schritte umfasst:
Bereitstellen eines Brenners, der eine Kontaktspitzenbaugruppe (200, 700, 1100) enthält, die eine erste Austrittsöffnung für eine erste Drahtelektrode und eine zweite Austrittsöffnung für eine zweite Drahtelektrode aufweist, wobei die erste und die zweite Austrittsöffnung der Kontaktspitzenbaugruppe so voneinander getrennt sind, dass eine Distanz S zwischen der ersten Drahtelektrode und der zweiten Drahtelektrode entsteht;
wobei das Verfahren des Weiteren umfasst:
Verstellen der Distanz S, die zwischen der ersten Drahtelektrode und der zweiten Drahtelektrode besteht;
Anlegen einer Stromwellenform über die Kontaktspitzenbaugruppe sowohl an die erste Drahtelektrode als auch an die zweite Drahtelektrode; und
Bilden eines Überbrückungstropfens zwischen der ersten Drahtelektrode und der zweiten Drahtelektrode unter Verwendung der Stromwellenform, wobei der Überbrückungstropfen die erste Drahtelektrode und die zweite Drahtelektrode vor dem Kontaktieren eines Schmelzbades während eines Abschmelzvorgangs koppelt, wobei der Schritt des Verstellens der Distanz S das Ersetzen der Kontaktspitzenbaugruppe umfasst, oder wobei der Schritt des Verstellens der Distanz (S) das Ändern eines Abstands zwischen der ersten Austrittsöffnung und der zweiten Austrittsöffnung der Kontaktspitzenbaugruppe umfasst, wobei das Verstellen des Abstands durchgeführt wird durch: Verstellen einer Distanz zwischen der ersten Austrittsöffnung und der zweiten Austrittsöffnung unter Verwendung eines Satzes Kontaktspitzenbaugruppen, wobei jede Kontaktspitzenbaugruppe einen geringfügig anderen Austrittsöffnungsabstand aufweist, oder durch eine Kontaktspitzenbaugruppe, die mehrere Sätze von Bohrungen oder Kanälen für die Drahtelektroden enthält und Austrittsöffnungen aufweist, die durch unterschiedliche Distanzen getrennt sind.

5. Verfahren nach Anspruch 4, wobei die Lichtbogenbreite des Abschmelzvorgangs von der Distanz S abhängig ist, die zwischen der ersten Drahtelektrode und der zweiten Drahtelektrode besteht.

6. Verfahren nach Anspruch 4 oder 5, wobei die Distanz S - zwischen am nächsten beieinanderliegenden Rändern der ersten Drahtelektrode und der zweiten Drahtelektrode gemessen - im Bereich von 0,5 bis 3,5 mm liegt.

7. Verfahren nach einem der Ansprüche 4 bis 6, wobei die Kontaktspitzenbaugruppe aufweist:
eine erste Bohrung, die mit der ersten Austrittsöffnung in Verbindung steht;
eine zweite Bohrung, die mit der zweiten Austrittsöffnung in Verbindung steht;
eine dritte Bohrung, die mit einer dritten Austrittsöffnung in Verbindung steht; und
eine vierte Bohrung, die mit einer vierten Austrittsöffnung in Verbindung steht, und
wobei der Schritt des Verstellens der Distanz S das Bewegen der ersten Drahtelektrode von der ersten Bohrung zu der dritten Bohrung und das Bewegen der zweiten Drahtelektrode von der zweiten Bohrung zu der vierten Bohrung umfasst.

## Revendications

1. Système de fabrication d'additif ou de soudage (100), comprenant :
un assemblage de tube contact (200, 700, 1100) incluant :
une première partie électriquement conductrice comportant un premier passage de fil se terminant à un premier orifice de sortie ;
une deuxième partie électriquement conductrice comportant un deuxième passage de fil se terminant à un deuxième orifice de sortie,
dans lequel la première partie électriquement conductrice et la deuxième partie électriquement conductrice sont électriquement reliées directement l'une à l'autre, et un espacement entre le premier orifice de sortie et le deuxième orifice de sortie est ajustable ; **caractérisé en ce que** le système comprend
un moyen d'ajustement de l'espacement entre le premier orifice de sortie et le deuxième orifice de sortie,
dans lequel le moyen d'ajustement de l'espacement comprend
un ensemble d'assemblages de tube contact, dans lequel chaque assemblage de tube contact comporte un espacement d'orifice de sortie légèrement différent, ou
un assemblage de tube contact incluant de multiples ensembles d'alésages ou de canaux pour les fils-électrodes comportant des orifices de sortie (1118, 1120, 1122, 1124) séparés de distances différentes.

2. Système de fabrication d'additif ou de soudage (100) selon la revendication 1, comprenant en outre une alimentation électrique (109) et un dispositif de commande (120) qui commande un fonctionnement de l'alimentation électrique (109), dans lequel l'alimentation électrique (109) est reliée fonctionnellement à l'assemblage de tube contact (200, 700, 1100) pour fournir une forme d'onde de courant à l'assemblage de tube contact (100, 700, 1100), et dans lequel la gouttelette de pont est formée par la forme d'onde de courant.

3. Système de fabrication d'additif ou de soudage (100) selon la revendication 1 ou 2, dans lequel une largeur d'arc de l'opération de dépôt dépend d'une distance (S) prévue entre les deux fils-électrodes amenés à travers l'assemblage de tube contact (200, 700, 1100).

4. Procédé de fabrication d'additif ou de soudage, comprenant les étapes suivantes :
la fourniture d'un chalumeau incluant un assemblage de tube contact (200, 700, 1100) comportant un premier orifice de sortie pour un premier fil-électrode et un deuxième orifice de sortie pour un deuxième fil-électrode, dans lequel les premier et deuxième orifices de sortie de l'assemblage de tube contact sont séparés l'un de l'autre de sorte qu'une distance S soit prévue entre le premier fil-électrode est le deuxième fil-électrode ;
dans lequel le procédé comprend en outre :
l'ajustement de la distance S prévue entre le premier fil-électrode et le deuxième fil-électrode ;
la fourniture d'une forme d'onde de courant à la fois au premier fil-électrode et au deuxième fil-électrode à travers l'assemblage de tube contact ; et
la formation d'une gouttelette de pont entre le premier fil-électrode et le deuxième fil-électrode à l'aide de la forme d'onde de courant, dans lequel la gouttelette de pont couple le premier fil-électrode et le deuxième avant de venir au contact d'un bain de fusion au cours d'une opération de dépôt, dans lequel l'étape d'ajustement de la distance S inclut le remplacement de l'assemblage de tube contact, ou dans lequel l'étape d'ajustement de la distance (S) inclut le changement d'un espacement entre le premier orifice de sortie et le deuxième orifice de sortie de l'assemblage de tube contact, dans lequel l'ajustement de l'espacement est réalisé par l'ajustement d'une distance entre le premier orifice de sortie et le deuxième orifice de sortie à l'aide d'un ensemble d'assemblages de tube contact, dans lequel chaque assemblage de tube contact présente un espacement d'orifice de sortie légèrement différent, ou par un assemblage de tube contact incluant de multiples ensembles d'alésages ou de canaux pour les fils-électrodes comportant des orifices de sortie séparés de distances différentes.

5. Procédé selon la revendication 4, dans lequel une largeur d'arc de l'opération de dépôt dépend de la distance S prévue entre le premier fil-électrode et le deuxième fil-électrode.

6. Procédé selon la revendication 4 ou 5, dans lequel la distance S est dans la plage de 0,5 à 3,5 mm telle que mesurée entre des bords les plus proches du premier fil-électrode et du deuxième fil-électrode.

7. Procédé selon l'une quelconque des revendications 4 à 6, dans lequel l'assemblage de tube contact inclut :
un premier alésage en communication avec le premier orifice de sortie ;
un deuxième alésage en communication avec le deuxième orifice de sortie ;
un troisième alésage en communication avec un troisième orifice de sortie ; et
un quatrième alésage en communication avec un quatrième orifice de sortie, et
dans lequel l'étape d'ajustement de la distance S inclut le déplacement du premier fil-électrode du premier alésage au troisième alésage, et le déplacement du deuxième fil-électrode du deuxième alésage au quatrième alésage.
